# EUROPÄISCHE PATENTANMELDUNG

(11) **EP 0 985 861 A2**
(43) Veröffentlichungstag der Anmeldung: **15.03.2000**
(21) Anmeldenummer: 99116471.6
(22) Anmeldetag: 21.08.1999
(51) Int. Cl.: F16J 9/20

(54) **Ölabstreifkolbenring**

(30) Priorität: 08.09.1998 DE 19840918
(71) Anmelder: Federal-Mogul Burscheid GmbH, 51399 Burscheid (DE)
(72) Erfinder: Katsaounis, Evangelos, 51379 Leverkusen (DE)

(57) **Zusammenfassung**

Die Erfindung betrifft einen Ölabstreifkolbenring 1 bestehend aus einem einstückigen Ringkörper, dessen Lauffläche in drei Laufflächenstege (2,2',2'') unterteilt ist. Auf der Rückenfläche erstrecken sich zwei Schlauchfedern (5,5') in einer Nut (6,6') mit unterschiedlich schräg verlaufenden Nutflanken (7,7',7'',7''').

## Beschreibung

Die Erfindung betrifft einen Ölabstreifkolbenring für Brennkraftmaschinen, bestehend aus einm einstückigen Ringkörper, dessen Lauffläche in drei Laufflächenstege unterteilt ist, wobei zwischen den Laufflächenstegen Ölabflußlöcher vorgesehen sind, die sich radial bis durch die Ringrückenfläche erstrecken.

Üblicherweise werden moderne Brennkraftmaschinen mit Kolben bestückt, die einen 1. und 2. Kompressionskolbenring und einen Ölabstreifkolbenring aufweisen, d. h. es sind im Kolben drei separate Nuten erforderlich. Die hierfür verwendeten Ölabstreifkolbenringe bestehen aus Stahl oder Gußeisen und weisen einen H - oder X - förmigen Querschnitt auf, so daß auf der dem Zylinder zugewandten Umfangsfläche zwei Stege gebildet werden, die als Lauffläche fungieren. Auf der Ringrückenfläche ist eine Nut zur Aufnahme einer Schlauchfeder angeordnet. Die DE 42 00 489 C2 offenbart einen solchen Kolbenring.
Zur Verbesserung der abstreifenden Wirkung des Ölringes kann u.a. die Tangentialkraft der Schlauchfeder herangezogen werden.
Die auf den Laufstegen wirkende Kraft der Feder erzeugt bei kleineren Gleitflächen einen größeren spezifischen Flächendruck. Da aber der Verschleiß der Laufpartner mit zunehmendem Flächendruck zunimmt, verringert sich die Lebensdauer der Ringe und mit zunehmendem Verschleiß tritt eine Verschlechterung der Abstreifwirkung ein.

Um die abstreifende Wirkung zu verbessern, hat man deshalb bereits die Laufflächen der Stege mit einer verschleißfesten Beschichtung versehen und darüber hinaus die Anzahl der Laufflächenstege erhöht. Aus der DE PS 10 65 235 ist ein gattungsgemäßer Ölabstreifkolbenring zu entnehmen, der mit drei Laufflächenstegen an der korrespondierenden Zylinderwand anliegt.
Bei mehr als zwei Laufstegen steht der Konstrukteur jedoch vor dem Problem, daß im Motorbetrieb aufgrund der thermischen Verzüge nicht alle Laufstege gleichzeitig an der Zylinderwand anliegen. Als Lösung dieses Problems wurden deshalb nur ein oder zwei Stege mit einer verschleißfesten Schicht versehen. Der ohne Verschleißschutzschicht ausgebildete Steg wurde mit einem radialen Übermaß versehen, so daß sich dieser während des Betriebes so abnutzt, daß sich nach einiger Zeit alle übrigen Stege ebenfalls an die Lauffläche anlegen.

Der Erfindung liegt die Aufgabe zugrunde, einen gattungsgemäßen Kolbenring dahingehend zu verbessern, daß bereits mit Beginn des Motorbetriebes sämtliche Laufstege an der Zylinderwand anliegen.

Diese Aufgabe wird erfindungsgemäß durch die kennzeichnenden Merkmale des Patentanspruch 1 gelöst. Vorteilhafte Ausgestaltungen der Erfindung sind in den Unteransprüchen dokumentiert.
Die besondere Ausgestaltung des Federbettes ermöglicht es, die Hauptwirkungslinie der Schlauchfeder d.h., die auf den äußeren Nutflanken wirkende Normalkraft so einzustellen, daß die äußeren Laufflächenstege relativ zum mittleren Laufflächensteg bewegbar sind. Auf diese Weise sind immer alle Stege im Eingriff mit der Zylinderlaufbahn.

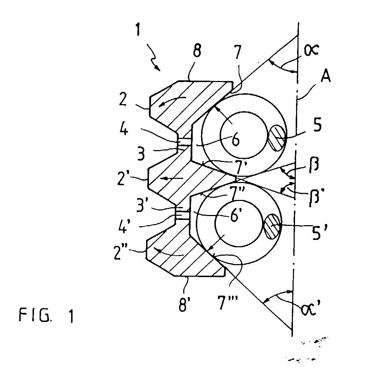

Die Erfindung ist anhand eines Ausführungsbeispieles in der Zeichnung dargestellt und wird im folgenden näher erläutert.
Der in der Figur 1 dargestellte Ölabstreifkolbenring 1 besteht aus einem einstückigen, aus Stahl gefertigtem Ringkörper. Die mit der Zylinderwand (nicht dargestellt) zusammenwirkenden Laufflächenstege 2,2',2'' sind über relativ schmale Verbindungsstege 3,3' miteinander gekoppelt.
Im Verhältnis zur gesamten Kolbenringfläche ist die Materialstärke der Verbindungsstege 3,3' sehr klein ausgeführt. Die in den Verbindungsstegen vorgesehenen Ölabflußlöcher 4,4' tragen dazu bei, daß die äußeren Laufstege 2,2'' relativ zum mittleren Laufflächensteg 2' in radialer Richtung bewegbar sind.

Auf der Ringrückenfläche des Ölabstreifkolbenringes 1 sind zwei axial übereinander angeordnete radial nach außen spannende Schlauchfedern 5,5' vorgesehen. Die als Federbett fungierende Nut 6,6' weist schräg verlaufende Nutflanken 7,7',7'',7''' auf. Die den Flanken 8,8' des Ölabstreifkolbenringes 1 zugeordneten Nutflanken 7,7''' verlaufen unter einem Winkel Alpha α,α 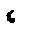 zur Kolbenringachse A. Die jeweils den Nutflanken 7,7''' gegenüberliegenden Nutflanken 7',7'' verlaufen unter einem Winkel Beta β,β 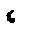 zur Kolbenringachse A. Über die Winkel α,α 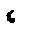 β,β 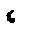 ist eine Verteilung der Tangentialkraft auf die Laufflächenstege einstellbar. Je nach Kolbenringmaterial und Kolbenringabmessung sind so für verschiedene Anwendungsfälle optimale Winkel einstellbar. Denkbar wäre es auch, die Schlauchfedern 5,5' unterschiedlich zu dimensionieren, um so den oberen oder unteren Laufflächensteg 2,2'' stärker an die Zylinderwand zu pressen. Selbstverständlich können die Laufflächenstege 2,2',2'' an den Oberflächen auch mit einer Verschleißschutzschicht versehen sein.
Mit dem erfindungsgemäßen Kolbenring 1 ist es nunmehr möglich, die übliche Kolbenbestückung bestehend aus zwei Kompressionsringen und einem Ölabstreifkolbenring zu verändern und auf einen Kompressionsring zu verzichten. Die von diesem nun fehlenden Kompressionsring gebildete Dichtfläche wird in den Ölabstreifkolbenring appliziert, so daß insgesamt die Anzahl der mit der Zylinderwand korrespondierenden Dichtflächen die gleiche ist, wobei jedoch auf eine Kolbenringnut verzichtet werden kann.

## Patentansprüche

1. Ölabstreifkolbenring für Brennkraftmaschinen, bestehend aus einem einstückigen Ringkörper dessen Lauffläche in drei Laufflächenstege unterteilt ist, wobei zwischen den Laufflächenstegen Ölabflußlöcher vorgesehen sind, die sich radial bis durch die Ringrückenfläche erstrecken, dadurch gekennzeichnet, daß auf der Ringrückenfläche zwei axial übereinander angeordnete radial nach außen spannende Schlauchfedern (5,5') vorgesehen sind, die sich je in einer als Federbett fungierenden Nut (6,6') in der Ringrückenfläche mit im Querschnitt schräg zur Kolbenringachse verlaufenden Nutflanken (7,7',7'',7''') erstrecken.

2. Ölabstreifkolbenring nach Anspruch 1, dadurch gekennzeichnet, daß die jeweils axial außen liegenden, den Flanken (8,8') des Ölabstreifkolbenringes (1) zugeordneten Nutflanken (7,7''') unter einem Winkel Alpha (α,α 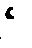 ) und die jeweils diesen gegenüberliegenden Nutflanken (7',7'') unter einem Winkel Beta (β,β 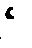 ) zur Kolbenringachse (A) verlaufen.

3. Ölabstreifkolbenring nach den Ansprüchen 1 und 2, dadurch gekennzeichnet, daß der Winkel Alpha (α,α 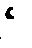 ) kleiner als der Winkel Beta (β,β 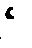 ) ausgebildet ist.

4. Ölabstreifkolbenring nach den Ansprüchen 1 bis 3, dadurch gekennzeichnet, daß der Winkel Alpha (α,α 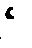 ) zwischen 10° und 70° und Beta (β,β 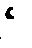 ) zwischen 30° und 90° verläuft.

5. Ölabstreifkolbenring nach den Ansprüchen 1 bis 4, dadurch gekennzeichnet, daß die Schlauchfedern (5,5') symmetrisch auf der Ringrückenfläche angeordnet sind.

6. Ölabstreifkolbenring nach den Ansprüchen 1 bis 5, dadurch gekennzeichnet, daß die Schlauchfedern (5,5') unterschiedliche Tangentialkräfte aufweisen.
